# EUROPÄISCHE PATENTSCHRIFT

(11) **EP 3 640 580 B1**
(45) Veröffentlichungstag und Bekanntmachung des Hinweises auf die Patenterteilung: **23.08.2023**
(21) Anmeldenummer: 18200440.8
(22) Anmeldetag: 15.10.2018
(51) Int. Cl.: G01B 9/02, G01B 11/06, G01B 7/06

(54) **VERFAHREN UND VORRICHTUNG ZUM BERÜHRUNGSLOSEN UND ZERSTÖRUNGSFREIEN BESTIMMEN DER SCHICHTDICKEN VON LACKSCHICHTEN VON FAHRZEUGTEILEN**
METHOD AND APPARATUS FOR THE NON-DESTRUCTIVE AND CONTACT-FREE CHECKING OF THE THICKNESS OF PAINT LAYERS FOR VEHICLE PARTS
PROCÉDÉ ET DISPOSITIF DE DÉTERMINATION NON DESTRUCTIVE ET SANS CONTACT DES ÉPAISSEURS DE COUCHE DES COUCHES DE VERNIS DES PARTIES DE VÉHICULE

(43) Veröffentlichungstag der Anmeldung: 22.04.2020
(73) Patentinhaber: Motherson Innovations Company Limited, London EC2N 2AX (GB); INNOTEST AG, 8360 Eschlikon (CH)
(72) Erfinder: Maier, Simon, 92363 Breitenbrunn (DE); Posler, Bettina, 85139 Wettstetten (DE); Riehs, Johannes, 85283 Wolnzach (DE); Wagner, Harald, 93333 Neustadt/Donau (DE); Florin, Christian, 6373 Ennetbürgen (CH)
(74) Vertreter: Westphal, Mussgnug & Partner Patentanwälte mbB

(56) Entgegenhaltungen:
- WO-A1-2017/168181
- DE-A1- 4 325 767
- YUE DONG ET AL: "Nondestructive analysis of automotive paints with spectral domain optical coherence tomography", APPLIED OPTICS, Bd. 55, Nr. 13, 1. Mai 2016 (2016-05-01), Seite 3695, XP055406737, WASHINGTON, DC; US ISSN: 0003-6935, DOI: 10.1364/AO.55.003695

## Beschreibung

Die vorliegende Erfindung betrifft ein Verfahren und eine Vorrichtung zum berührungslosen und zerstörungsfreien Bestimmen der Schichtdicken von Lackschichten von Fahrzeugteilen.

Die Anforderungen an die Qualität von Fahrzeugteilen werden immer höher, unter anderem hinsichtlich ihrer optischen Erscheinung. Gleichzeitig ist man bestrebt, die Fahrzeugteile mit einem minimalen Ressourceneinsatz herzustellen. Der Lackierung der Fahrzeugteile kommt daher eine entscheidende Bedeutung zu. Dabei soll die Lackierung einerseits ein ausreichendes Deckvermögen zur Verfügung stellen, so dass das betreffende Fahrzeugteil unter jedem Blickwinkel und allen Lichtverhältnissen einen kräftigen und gleichbleibenden Farbeindruck hinterlässt. Andererseits sollen die Lackschichten der Lackierung so dünn wie möglich sein, um die Menge der verwendeten Lacke gering zu halten.

Im Zuge der Bestrebungen, das Fahren zu automatisieren und das autonome Fahren zu ermöglichen, spielt die Erfassung des Umfelds des Fahrzeugs eine entscheidende Rolle. Auch Vorstufen des autonomen Fahrens wie Fahrer-Assistenzsysteme basieren auf der Erfassung des Umfelds des Fahrzeugs. Beispiele derartiger Fahrer-Assistenzsysteme sind Abstandsregelungen oder Spurwechselassistenten. Bei der Erfassung des Umfelds des Fahrzeugs werden unter anderem Radarstrahlen eingesetzt. Die Schichtdicke der Lackierung, insbesondere von Metallic-Lackierungen, beeinflusst jedoch die Dämpfung von Radarstrahlen, so dass eine gleichbleibende Schichtdicke eine Grundvoraussetzung für eine reproduzierbare Erfassung des Umfelds des Fahrzeugs darstellt und individuelle und zeitintensive Kalibrierungen der betreffenden Radarsensoren überflüssig macht.

Die Schichtdicke der Lackierung kann beispielsweise mit einer kapazitiven oder magnetinduktiven Schichtdickenmessung bestimmt werden. Diese Messverfahren setzen aber eine elektrische oder magnetische Leitfähigkeit des Fahrzeugteils, auf dem die Lackierung aufgebracht ist, voraus. Die Schichtdicke der Lackierung, die auf Fahrzeugteilen aufgebracht ist, welche aus Kunststoff bestehen, kann mit derartigen Messverfahren bislang nicht bestimmt werden. Ein weiterer Nachteil ist, dass mit derartigen Messverfahren nur die Gesamtschichtdicke der Lackierungen bestimmt werden kann. Da aber moderne Lackierungen mindestens zwei, üblicherweise aber drei oder vier Schichten aufweisen, ist die Bestimmung der Gesamtschichtdicke nur teilweise von Nutzen, da jede Schicht im vorgegebenen Bereich liegen muss, um die die Anforderungen an die Qualität der Lackierung, insbesondere an die optische Erscheinung, die Witterungsbeständigkeit und die mechanische Beständigkeit, erfüllen zu können, auch wenn die Gesamtschichtdicke im vorgesehenen Bereich liegt.

Lackiervorrichtungen, welche eine Messvorrichtung zum Bestimmen der Gesamtschichtdicke einer Lackierung aufweisen, sind beispielsweise in der EP 2 262 590 A1 offenbart. Messvorrichtungen zum Bestimmen der Gesamtschichtdicke einer Lackierung sind in der WO 99/44011 beschrieben. Aus der EP 1 326 059 A1 ist ein Verfahren zum Bestimmen der Eigenschaften eines Mehrschichtenaufbaus bekannt. Weitere Verfahren zum Bestimmen von Schichtdicken von Lackschichten sind aus der WO2017/168181 A1 bekannt. Die DE 43 25 767 A1 beschreibt ein Verfahren zum Bestimmen von Schichtdicken auf magnetisch oder elektrisch leitenden Grundwerkstoffen.

Der Anteil von Fahrzeugteilen, die aus Kunststoff gefertigt werden, steigt immer weiter an. Vorteile von Kunststoff sind unter anderem das geringe Gewicht und die Unempfindlichkeit gegenüber Korrosion. Aufgrund der guten Umformbarkeit ist eine mechanische Nachbehandlung häufig überflüssig. Allerdings ist die Oberfläche der Fahrzeugteile aus Kunststoff empfindlich gegenüber Abrieb, Verwitterung oder bestimmten Chemikalien. Die Oberflächen können bei der kleinsten Berührung beschädigt werden, wodurch sie ihren ursprünglichen Glanz verlieren. Um diesem Phänomen vorzubeugen, werden Kunststoffe mit unterschiedlichen Lackschichten beschichtet. Damit die Fahrzeugteile aus Kunststoff gegenüber den genannten äußeren Einflüssen ausreichend geschützt sind, müssen die verschiedenen Lackschichten die geforderten Schichtdicken aufweisen.

Aufgabe einer Ausführungsform der vorliegenden Erfindung ist es, ein Verfahren anzugeben, mit welchem es auf einfache Weise möglich ist, die Schichtdicken jeder Lackschicht einer Lackierung zu bestimmen, welche mindestens zwei Lackschichten aufweist. Des Weiteren liegt einer Ausgestaltung der vorliegenden Erfindung die Aufgabe zugrunde, eine Vorrichtung zu schaffen, welche zum Durchführen dieses Verfahrens eingerichtet ist.

Diese Aufgabe wird mit den in den Ansprüchen 1, 2 und 5 angegebenen Merkmalen gelöst. Vorteilhafte Ausführungsformen sind Gegenstand der Unteransprüche.

Eine erste Ausführungsform der Erfindung betrifft ein Verfahren zum berührungslosen und zerstörungsfreien Bestimmen der Schichtdicken von Lackschichten von Fahrzeugteilen, umfassend folgende Schritte:
- Bereitstellen eines Fahrzeugteils, wobei das Fahrzeugteil aus einem elektrisch leitfähigen Material besteht oder dieses umfasst, mit
   ∘ einer auf das Fahrzeugteil aufgebrachten ersten Lackschicht, die eine erste Schichtdicke aufweist, und
   ∘ mindestens einer auf die erste Lackschicht aufgebrachten weiteren Lackschicht, die eine weitere Schichtdicke aufweist, wobei zumindest die weitere Lackschicht optisch deckend ist,
- Bestimmen der Schichtdicken aller weiteren Lackschichten mittels optischer Kohärenztomographie mittels einer Vorrichtung, die zum Durchführen einer optischen Kohärenztomographie ausgebildet ist und eine Messeinrichtung zum Durchführen einer dielektrischen, kapazitiven oder magnetinduktiven Schichtdickenmessung aufweist,
- Bestimmen der Gesamtschichtdicke der Lackschichten mittels einer dielektrischen, kapazitiven oder magnetinduktiven Schichtdickenmessung unter Verwendung der Messeinrichtung,
- Bestimmen der Schichtdicke der ersten Lackschicht dadurch, dass die Dicken aller weiteren Lackschichten von der Gesamtschichtdicke abgezogen werden,
- wobei die Vorrichtung mindestens eine Strahlungsquelle zum Bereitstellen von elektromagnetischer Strahlung aufweist und die elektromagnetische Strahlung eine Wellenlänge von 100 bis 15*10³ nm und insbesondere 380 bis 800 nm zum Durchführen der optischen Kohärenztomographie bereitstellt.

Die optische Kohärenztomographie ist bislang für die Bestimmung von Fahrzeugteilen, die mit Lackierungen mit mehreren Lackschichten versehen sind, nicht eingesetzt worden. Elektromagnetische Strahlung mit einer Wellenlänge von 380 bis 800 nm liegt im sichtbaren Bereich, so dass derartige elektromagnetische Strahlung im Allgemeinen als Lichtstrahlen bezeichnet wird. Bekannt ist die Verwendung der optischen Kohärenztomographie unter Verwendung einer derartigen Wellenlänge zum Bestimmen der Schichtdicken von transparenten Schichten. Da aber Fahrzeugteile nur in äußersten Ausnahmen ausschließlich transparente Lackschichten versehen sind, ist eine Verwendung der optischen Kohärenztomographie zum Bestimmen der Schichtdicken von farbigen, optisch deckenden Lackschichten insbesondere unter Verwendung einer Wellenlänge von 380 bis 800 nm nicht in Betracht gezogen worden.

Eine für die Durchführbarkeit des vorliegenden Verfahrens entscheidende Erkenntnis ist die Verwendung von optisch deckenden und/oder transparenten Lackschichten. Wie bereits erörtert, stellt die Bestimmung der Schichtdicken von transparenten Lackschichten unter Verwendung einer Wellenlänge von 380 bis 800 nm kein Problem dar. Wenn allerdings opake und damit für Lichtstrahlen undurchlässige Lackschichten verwendet werden, kann die optische Kohärenztomographie unter Verwendung einer Wellenlänge von 380 bis 800 nm nicht eingesetzt werden. Unter einer optisch deckenden Lackschicht ist eine Lackschicht zu verstehen, bei welcher die erscheinende Farbe, beispielsweise Gelb, auch als gelb gesehen wird. Eine optisch nicht-deckende Lackschicht liegt vor, wenn der Untergrund durchscheint, sprich, die erscheinende Farbe, beispielsweise Gelb, nur als Mischung der Farbe Gelb und der Farbe der darunterliegenden ersten Lackschicht beispielsweise Grau, Schwarz oder Weiß wahrgenommen wird. Charakteristisch hierfür ist bei der Farbe Gelb ein starker Grünstich bei grauer Grundierung. Zudem ist die Helligkeit je nach Untergrundfarbe verschoben. Eine optisch deckende Lackschicht ist für die Lichtstrahlen der genannten Wellenlänge trotzdem teildurchlässig. Eine derartige optisch deckende Lackschicht kann beispielsweise dadurch erreicht werden, dass in einer Kunststoffmatrix mikroskopisch gesehen punktuell Farbpigmente eingelagert sind, welche trotz des oben beschriebenen Farbeffekts dennoch genügend Durchtrittsmöglichkeiten für Lichtstrahlen bereitstellen. Folglich lässt sich die optische Kohärenztomographie überraschenderweise doch für die Bestimmung von Schichtdicken von optisch deckenden Lackschichten einsetzen, obwohl sichtbare Lichtstrahlen eingesetzt werden.

Die Verwendung von Lichtstrahlen hat den Vorteil, dass diese für den Benutzer der Vorrichtung sichtbar sind und für ihn im Allgemeinen keine Gefahr darstellen. Für den Fall, dass Laserstrahlen verwendet werden, können entsprechende Schutzmaßnahmen ergriffen werden, die sich vergleichsweise einfach durchführen lassen. Darüber hinaus ist die Bereitstellung von Lichtstrahlen vergleichsweise einfach, so dass die Strahlungsquelle kostengünstig bereitgestellt werden kann. Des Weiteren lassen sich die Schichtdicken der betreffenden Lackierung mittels der optischen Kohärenztomographie berührungslos und zerstörungsfrei bestimmen. Hierdurch ergibt sich die Möglichkeit, das vorschlagsgemäße Verfahren für die Qualitätskontrolle in der Serienfertigung der Fahrzeugteile einzusetzen. Die Qualitätskontrolle lässt sich folglich ohne nennenswerten zeitlichen Mehraufwand in der Serienfertigung durchführen.

Bei üblicherweise eingesetzten Lackierungen werden mehrere weitere Lackschichten verwendet, wobei in den meisten Fällen die auf die erste Lackschicht aufgebrachte Lackschicht, also die untere der weiteren Lackschichten, optisch deckend ist.

Die obere der weiteren Lackschichten ist eine transparente Lackschicht, auch als Klarlackschicht bezeichnet.

Erfindungsgemäß weist die Vorrichtung eine Messeinrichtung zum Durchführen einer dielektrischen, kapazitiven oder magnetinduktiven Schichtdickenmessung auf, wobei und das Fahrzeugteil aus Kunststoff besteht oder eine Kunststoffschicht umfasst, auf welche die erste Lackschicht aufgebracht ist, wobei zumindest eine der Lackschichten elektrisch leitfähig ist und zumindest die kumulierte Schichtdicke der übrigen, über der elektrisch leitfähigen Schicht liegenden Schichten mit der Messeinrichtung bestimmt wird.

Wie oben erwähnt, ist eine elektrische Leitfähigkeit notwendig, um eine dielektrische, kapazitive oder magnetinduktive Schichtdickenmessung durchführen zu können. In dieser Ausführungsform ist zumindest eine der Lackschichten elektrisch leitfähig, so dass auch eine dielektrische, kapazitive oder magnetinduktive Schichtdickenmessung durchgeführt werden kann. Die betreffende Lackschicht kann beispielsweise durch das Zusetzen von elektrisch leitfähigen Partikeln wie Rußpartikeln elektrisch leitfähig gemacht werden. Das Zusetzen von Rußpartikeln hat zudem noch eine befestigende Wirkung auf die betreffende Lackschicht.

Mit "über der elektrisch leitfähigen Schicht liegenden Schichten" sind die elektrisch nicht leitfähigen Schichten gemeint, die zwischen der elektrisch leitfähigen Schicht und der freien Oberfläche der Lackierung liegen. Unter Verwendung der dielektrischen, kapazitiven oder magnetinduktiven Schichtdickenmessung kann der Abstand von der freien Oberfläche der Lackierung bis zu der ersten, elektrisch leitfähigen Schicht gemessen werden. Wenn die erste elektrisch leitfähige Schicht die erste Lackschicht ist und die Lackierung sonst keine weiteren elektrisch leitfähigen Lackschichten aufweist, kann die kumulierte Schichtdicke der auf der ersten Lackschicht aufgebrachten übrigen Lackschichten bestimmt werden. Wenn die einzelnen Schichtdicken der übrigen Lackschichten mit der optischen Kohärenztomographie bestimmt werden, erhält man mit der dielektrischen, kapazitiven oder magnetinduktiven Schichtdickenmessung einen weiteren Wert, um die mit der optischen Kohärenztomographie bestimmten Werte für die Schichtdicken auf Plausibilität hin zu kontrollieren. Wenn die optische Kohärenztomographie für die Bestimmung der Schichtdicken der übrigen Lackschichten beispielsweise aufgrund der Lackeigenschaften nicht eingesetzt werden kann, kann die dielektrische, kapazitive oder magnetinduktive Schichtdickenmessung ersatzweise verwendet werden.

Eine zweite Ausführungsform der Erfindung betrifft ein Verfahren zum berührungslosen und zerstörungsfreien Bestimmen der Schichtdicken von Lackschichten von Fahrzeugteilen, umfassend folgende Schritte:
- Bereitstellen eines Fahrzeugteils, mit
   o einer auf das Fahrzeugteil aufgebrachten ersten Lackschicht, die eine erste Schichtdicke aufweist und elektrisch leitfähig ist, und
   ∘ mindestens einer auf die erste Lackschicht aufgebrachten weiteren Lackschicht, die eine weitere Schichtdicke aufweist, wobei zumindest die weitere Lackschicht optisch deckend ist,
- Bestimmen der Schichtdicken aller weiteren Lackschichten
   ∘ wobei eine zweite Schichtdicke, eine dritte Schichtdicke und eine vierte Schichtdicke mittels der optischen Kohärenztomographie bestimmt werden, und
   ∘ wobei die Summe der zweiten Schichtdicke, der dritten Schichtdicke und der vierten Schichtdicke mittels einer dielektrischen, kapazitiven oder magnetinduktiven Schichtdickenmessung bestimmt wird, mittels einer Vorrichtung, die zum Durchführen einer optischen Kohärenztomographie ausgebildet ist und eine Messeinrichtung zum Durchführen einer dielektrischen, kapazitiven oder magnetinduktiven Schichtdickenmessung aufweist,
- Vergleichen der mittels Kohärenztomographie und der dielektrischen, kapazitiven oder magnetinduktiven Schichtdickenmessung bestimmten Schichtdicken aller weiteren Lackschichten und Prüfen auf Plausibilität,
wobei die Vorrichtung mindestens eine Strahlungsquelle zum Bereitstellen von elektromagnetischer Strahlung aufweist und die elektromagnetische Strahlung eine Wellenlänge von 100 bis 15*10³ nm und insbesondere 380 bis 800 nm zum Durchführen der optischen Kohärenztomographie bereitstellt.

Während die erste Ausführungsform den Fall betrifft, dass das Fahrzeugteil aus einem elektrisch leitfähigen Material besteht oder dieses umfasst, betrifft die zweite Ausführungsform den Fall, dass die auf das Fahrzeugteil aufgebrachte erste Lackschicht elektrisch leitfähig ist. Die zweite Ausführungsform ist unabhängig davon, ob das Fahrzeugteil aus einem elektrisch leitfähigen Material besteht oder dieses umfasst oder nicht. In einer weiteren Ausführungsform wird eine erste Strahlungsquelle mit einer ersten Wellenlänge bereitgestellt und die Schichtdicke mittels optischer Kohärenztomographie und bekannten Brechungsindices der einzelnen Lackschichten bestimmt. Zum Durchführen der optischen Kohärenztomographie ist es notwendig, den Brechungsindex für die Lackschicht zu bestimmen, deren Schichtdicke bestimmt werden soll. Der Brechungsindex der Lackschichten wird im Allgemeinen bekannt sein, allerdings kann dieser auch unter Verwendung der optischen Kohärenztomographie bestimmt werden, bevor die eigentliche Schichtdicke gemessen wird.

Nach Maßgabe einer weiteren Ausführungsform wird die Bestimmung der ersten Schichtdicke und/oder der weiteren Schichtdicke unter Verwendung einer ersten Strahlungsquelle und einer zweiten Strahlungsquelle durchgeführt, wobei die erste Strahlungsquelle elektromagnetische Strahlung mit einer ersten Wellenlänge und die zweite Strahlungsquelle elektromagnetische Strahlung mit einer zweiten Wellenlänge bereitstellt.

Beim Herstellen der Lacke wird die Farbe häufig in mehreren Schritten mit Farbpasten unterschiedlicher Menge getönt, um Schwankungen in der Qualität der Rohstoffe auszugleichen. Folglich unterliegt die Rezeptur des betreffenden Lacks mit jeder Charge Schwankungen, wodurch sich auch der Brechungsindex n einer bestimmten Lackschicht ändert. Durch die Verwendung von mindestens zwei Lichtquellen mit unterschiedlicher Wellenlänge, die jeweils beide ein geeignetes reflektiertes Signal liefern, kann der nur materialabhängige Brechungsindex einer Schicht aus der Bestimmungsgleichung für die Schichtdicke eliminiert werden. Eine farbabhängige Kalibrierung mit dem Brechungsindex der betreffenden Farbe beispielsweise n(blauer Lack) = 1,21065, der im Messgerät eingespeichert sein kann, ist somit unnötig.

In einer weitergebildeten Ausführungsform kann die Bestimmung der ersten Schichtdicke und/oder der weiteren Schichtdicke unter Verwendung einer dritten Strahlungsquelle durchgeführt werden, wobei die dritte Strahlungsquelle elektromagnetische Strahlung mit einer dritten Wellenlänge bereitstellt. Insbesondere bei sehr dunklen oder schwarzen Lackschichten werden nahezu sämtliche Lichtstrahlen im sichtbaren Bereich absorbiert. Die von der dritten Strahlungsquelle bereitgestellte Strahlung weist daher eine dritte Wellenlänge auf, welche insbesondere außerhalb des sichtbaren Bereichs liegt, beispielsweise ultraviolette oder Infrarotstrahlung.

Je nach Farbe der Lackschicht, deren Schichtdicke bestimmt werden soll, kann es zu Wechselwirkungen zwischen den Farbpigmenten und den Lichtstrahlen kommen. Hierdurch kann es dazu kommen, dass keine Reflexion an den Grenzflächen möglich ist. Beispielsweise absorbiert eine blaue Lackschicht gelbes Licht, also Licht der Komplementärfarbe, und reflektiert Lichtstrahlen der übrigen Wellenlängen. Wenn die gewählte Wellenlänge der Lichtstrahlen ebenfalls im gelben Bereich liegt, kann keine Bestimmung der Schichtdicke durchgeführt werden. Dadurch, dass die Bestimmung der Schichtdicken mit Lichtstrahlen durchgeführt wird, die unterschiedliche Wellenlängen aufweisen, können derartige Situationen vermieden werden.

Bei Metallic-Lackierungen werden neben den Farbpigmenten noch weitere, üblicherweise plättchenförmige Pigmente zugesetzt, welche den Metallic-Effekt hervorrufen. Beispielsweise werden Aluminiumflakes zum Erzeugen des Metallic-Effekts und gemahlenen Glimmerplättchen zum Erzeugen des Perl-Effekts der Lackschicht zugesetzt. An diesen Zusätzen können die Lichtstrahlen undefiniert reflektiert oder gebrochen werden, wodurch keine einheitliche Strahlungsfront mehr vorhanden ist und die optische Kohärenztomographie zu keinen verwertbaren Ergebnissen führt. Diese Reflexion und/oder diese Brechung treten aber nur in bestimmten Wellenlängen auf. Eine der beiden Wellenlängen kann daher so gewählt werden, dass die Lichtstrahlen an derartigen Zusätzen nicht gebrochen oder reflektiert werden.

Zudem wird eine Redundanz geschaffen für den Fall, dass eine der Lichtquellen ausfallen sollte. Darüber hinaus erhält man zwei unabhängige Messergebnisse, so dass eine gegenseitige Kontrolle der Messergebnisse möglich ist.

Wie bereits oben erwähnt, werden bei schwarzen oder bei dunklen Lackschichten die Lichtstrahlen vollständig oder nahezu vollständig absorbiert. Für den Fall, dass die erste, die zweite und die dritte Wellenlänge im sichtbaren Bereich liegen, lassen sich die Schichtdicken von schwarzen oder dunklen Lackschichten mittels der optischen Kohärenztomographie und unter Verwendung von Lichtstrahlen nur schwer bestimmen. Daher wird in dieser Ausführungsform ein weiteres, von der optischen Kohärenztomographie unabhängiges Messverfahren eingesetzt, mit welcher zumindest die Gesamtschichtdicke der betreffenden Lackierung bestimmt werden kann. Für den Fall, dass beispielsweise die Lackierung eine schwarze Lackschicht und eine darauf aufgebrachte transparente Lackschicht aufweist, kann die Schichtdicke der schwarzen Lackschicht dadurch bestimmt werden, dass die Dicke der transparenten Schicht von der Gesamtschichtdicke abgezogen wird. Voraussetzung für die dielektrische, kapazitive oder magnetinduktive Schichtdickenmessung ist, dass das Fahrzeugteil elektrisch leitfähig ist. Bei Karosserieteilen, die üblicherweise aus Blech bestehen, lässt sich somit das Verfahren nach dieser Ausführungsform problemlos anwenden.

Eine Ausbildung der Erfindung betrifft eine Vorrichtung zum berührungslosen und zerstörungsfreien Bestimmen der Schichtdicken von Lackschichten von Fahrzeugteilen, welche zum Durchführen des Verfahrens nach einem der zuvor erläuterten Ausführungsformen eingerichtet ist. Hierzu umfasst die Vorrichtung
- eine Messeinrichtung zum Durchführen einer dielektrischen, kapazitiven oder magnetinduktiven Schichtdickenmessung,
- eine Strahlungsquelle zum Bereitstellen von elektromagnetischer Strahlung aufweist und die elektromagnetische Strahlung eine Wellenlänge von 100 bis 15*103 nm und insbesondere 380 bis 800 nm zum Durchführen einer optischen Kohärenztomographie bereitstellt,
- einen Detektor, der so konfiguriert ist, dass sich die Messstrahlen und die Referenzstrahlen der optischen Kohärenztomographie treffen, und
- eine Auswerteeinheit, die so konfiguriert ist, dass die vom Detektor und von der Messeinrichtung erzeugten Signale mittels der Auswerteeinheit unter Verwendung von hierauf hinterlegten geeigneten Algorithmen analysiert und aufbereitet werden.

Die technischen Effekte und Vorteile, die sich mit der vorschlagsgemäßen Vorrichtung erreichen lassen, entsprechen denjenigen, die für das vorliegende Verfahren erörtert worden sind. Zusammenfassend sei darauf hingewiesen, dass es unter Verwendung von Lichtstrahlen möglich ist, die Schichtdicken nicht nur von transparenten Lackschichten, sondern auch von optisch deckenden Lackschichten zu bestimmen. Die Bereitstellung von Lichtstrahlen und der Umgang mit den Lichtstrahlen für einen Benutzer der Vorrichtung sind vergleichsweise unkompliziert.

Beispielhafte Ausführungsformen der Erfindung werden im Folgenden unter Bezugnahme auf die beigefügten Zeichnungen näher erläutert. Es zeigen
- Figur 1: eine prinzipielle Darstellung einer Vorrichtung zum berührungslosen und zerstörungsfreien Bestimmen der Schichtdicken von Lackschichten von Fahrzeugteilen, und
- Figur 2: eine prinzipielle Darstellung zum Erläutern des erfindungsgemäßen Verfahrens.

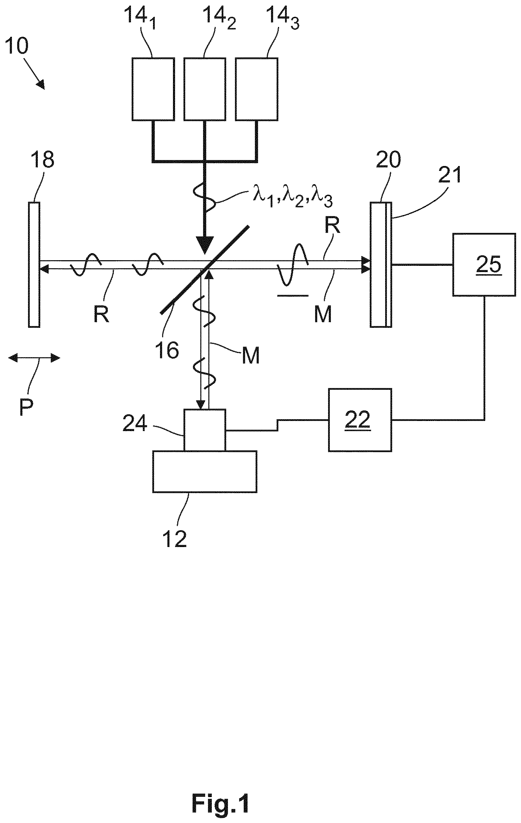

In Figur 1 ist ein Ausführungsbeispiel einer erfindungsgemäßen Vorrichtung 10 zum berührungslosen und zerstörungsfreien Bestimmen der Schichtdicken von Lackschichten von Fahrzeugteilen 12 anhand einer prinzipiellen Darstellung gezeigt. Die Vorrichtung 10 umfasst im dargestellten Ausführungsbeispiel eine erste Strahlungsquelle 14₁, eine zweite Strahlungsquelle 14₂ und eine dritte Strahlungsquelle 14₃, die in diesem Fall dazu ausgebildet sind, Lichtstrahlen bereitzustellen, wobei die erste Strahlungsquelle 14₁ Lichtstrahlen mit einer ersten Wellenlänge λ₁, die zweite Strahlungsquelle 14₂ Lichtstrahlen mit einer zweiten Wellenlänge λ₂ und die dritte Strahlungsquelle 14₃ Lichtstrahlen mit einer dritten Wellenlänge λ₃ aussenden. Die Wellenlängen λ₁ bis λ₃ liegen im sichtbaren Bereich, also zwischen 380 und 800 nm, wobei die Wellenlängen λ₁ bis λ₃ auch so gewählt werden können, dass sie außerhalb des sichtbaren Bereichs, beispielsweise im ultravioletten oder Infrarotbereich, liegen. Die von den Strahlungsquellen 14₁ ausgesendeten Lichtstrahlen treffen auf einen Strahlenteiler 16, welcher ein nicht dargestelltes Prisma aufweist und welcher die Lichtstrahlen in Referenzstrahlen R, die zu einem Spiegel 18 reflektiert werden, und in Messstrahlen M aufteilt, die zu einem Fahrzeugteil 12 gelenkt werden. Der Abstand des Spiegels 18 vom Strahlenteiler 16 kann mit einer nicht dargestellten Verstelleinrichtung verstellt werden, wie mit dem Pfeil P angedeutet.

Die Referenzstrahlen R treffen senkrecht auf den Spiegel 18, so dass sie in entgegengesetzter Richtung vom Spiegel 18 reflektiert werden. Auch die auf das Fahrzeugteil 12 gelenkten Messstrahlen M treffen senkrecht auf die Oberfläche des Fahrzeugteils 12 auf und werden daher ebenfalls in entgegengesetzter Richtung vom Fahrzeugteil 12 reflektiert. Während die vom Spiegel 18 reflektierten Referenzstrahlen R den Strahlenteiler 16 ohne eine Richtungsänderung durchlaufen, werden die vom Fahrzeugteil 12 reflektierten Messstrahlen M vom Strahlenteiler 16 umgelenkt, so dass sie parallel zu den vom Spiegel 18 reflektierten Referenzstrahlen R verlaufen. Anschließend treffen die Messstrahlen M und die Referenzstrahlen R auf einen Detektor 20, der ein Array 21 aus aktiven Pixelsensoren (APS) umfasst.

Weiterhin weist die Vorrichtung 10 eine Messeinrichtung 22 auf, mit welcher eine dielektrische, kapazitive oder magnetinduktive Schichtdickenmessung durchgeführt werden kann. Die Vorrichtung 10 umfasst einen Messkopf 24, der aus einem das Fahrzeugteil 12 schonenden Gummimaterial bestehen kann. über den Messkopf 24 können die Messstrahlen M senkrecht auf das Fahrzeugteil 12 geleitet werden. Zudem können die zum Durchführen der dielektrischen, kapazitiven oder magnetinduktiven Schichtdickenmessung verwendeten physikalischen Größen mit dem Messkopf 24 in das Fahrzeugteil 12 eingeleitet werden.

Die vom Detektor 20 und von der Messeinrichtung 22 erzeugten Signale werden mittels einer Auswerteeinheit 25 unter Verwendung von hierauf hinterlegten geeigneten Algorithmen analysiert und aufbereitet.

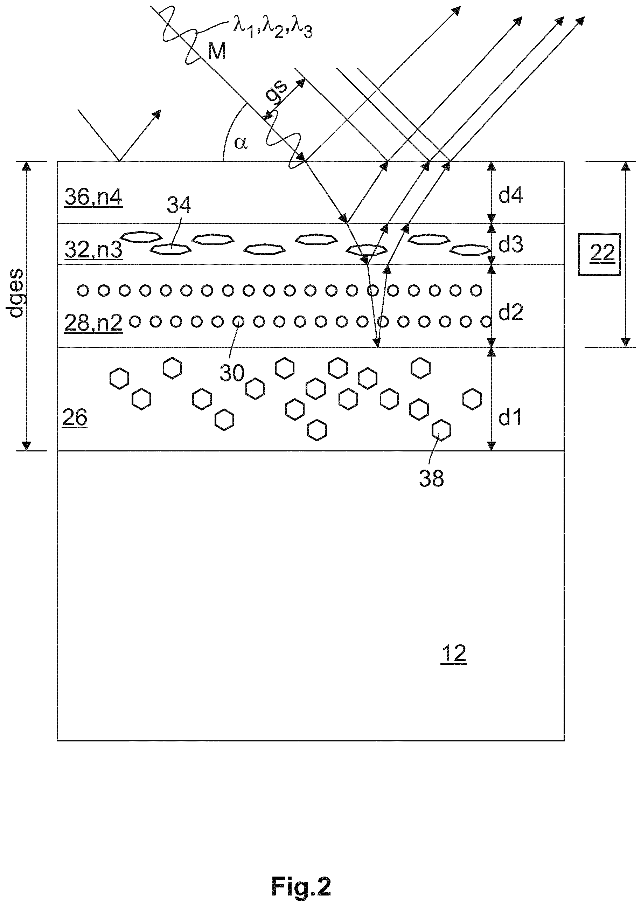

In Figur 2 ist das Fahrzeugteil 12 anhand einer prinzipiellen Darstellung näher gezeigt. Das Fahrzeugteil 12 selbst kann jede beliebige Form aufweisen und soll im dargestellten Beispiel aus Kunststoff bestehen oder zumindest eine nicht separat dargestellte Kunststoffschicht aufweisen. Alternativ kann das Fahrzeugteil 12 aber auch aus Metall bestehen, beispielsweise in Form eines Metallblechs, wie es bei einer Fahrzeugkarosserie üblich ist.

Auf das Fahrzeugteil 12 ist eine erste Lackschicht 26 mit einer ersten Schichtdicke d1 aufgebracht. Die erste Lackschicht 26 ist in der Regel eine elektrisch leitfähige Grundierung und wird häufig auch als Primer bezeichnet. Auf die erste Lackschicht 26 sind mehrere weitere Lackschichten aufgebracht, in diesem Fall insgesamt drei weitere Lackschichten 28, 32, 36. Auf die erste Lackschicht 26 ist eine zweite Lackschicht 28 mit einer zweiten Schichtdicke d2 aufgebracht, welche häufig auch als eine Basislackschicht bezeichnet wird. Die zweite Lackschicht 28 weist in eine nicht dargestellte Kunststoffmatrix eingebettete Farbpigmente 30 auf, welche dem Fahrzeugteil 12 die gewünschte Farbe verleihen. Die zweite Lackschicht 28 ist optisch deckend und für Lichtstrahlen durchlässig. Auf der zweiten Lackschicht 28 ist eine dritte Lackschicht 32 mit einer dritten Schichtdicke d3 aufgebracht, welche in diesem Fall als eine Perllackierung ausgebildet ist und plättchenförmige Pigmente 34 zum Erzeugen eines Perl-Effekts umfasst. Auf der dritten Lackschicht 32 ist eine durchsichtige vierte Lackschicht 36 mit einer vierten Schichtdicke d4 aufgebracht, die als eine transparente Klarlackschicht ausgeführt ist.

Wie erwähnt, handelt es sich bei der in Figur 2 dargestellten Lackierung um eine Perllackierung, die eher seltener eingesetzt wird. Bei den wesentlich häufiger anzutreffenden Uni- oder Metallic-Lackierungen (nicht dargestellt) sind die zweite Lackschicht 28 und die dritte Lackschicht 32 zu einer gemeinsamen Schicht zusammengefasst, so dass auf die erste Lackschicht 26 insgesamt zwei weitere Lackschichten aufgebracht sind. Wiederum ist die obere der weiteren Lackschichten eine transparente Lackschicht.

In Figur 2 ist der physikalische Effekt, welcher bei der optischen Kohärenztomographie genutzt wird, vereinfacht dargestellt. Zur Verdeutlichung treffen die Messstrahlen M in Figur 2 in einem Winkel α auf die vierte Lackschicht 36, obwohl sie, wie zu Figur 1 beschrieben, bei der Messung senkrecht auf das Fahrzeugteil 12 auftreffen. Es ist aber nicht zwingend notwendig, dass die Messstrahlen M, wie in Figur 1 gezeigt, senkrecht auf das Fahrzeugteil 12 auftreffen. Allerdings wird hierdurch die Menge an reflektiertem Licht gesteigert, was die Messgenauigkeit der Schichtdicken insbesondere von dunklen Lackschichten deutlich verbessert oder die Bestimmung der Schichtdicken überhaupt erst ermöglicht.

An jeder Grenzschicht zwischen den Lackschichten 26, 28, 32, 36 wird ein Teil der Messstrahlen M absorbiert, reflektiert oder gebrochen. Gemessen werden der Brechungsindex, in diesem Fall die Brechungsindices n2 bis n4 und die Laufzeit der Messstrahlen M in der zweiten, dritten und vierten Lackschicht 28, 32, 36. Im Strahlenteiler 16 interferieren die Messstrahlen M und die Referenzstrahlen R miteinander. Nur Photonen aus der gleichen Lichtquelle können am Strahlenteiler 16 interferieren. Aufgrund der Interferenz lässt sich ein Gangunterschied gs berechnen. Der Gangunterschied gs ist abhängig von den Schichtdicken d2, d3, d4 und den Brechungsindices n2 bis n4 der zweiten, dritten und vierten Lackschicht 28, 32, 36.

Wie aus Figur 2 hervorgeht, lassen sich die zweite Schichtdicke d2, die dritte Schichtdicke d3 und die vierte Schichtdicke d4 mittels der optischen Kohärenztomographie bestimmen. Je mehr Lackschichten vorhanden sind, desto größer wird der absorbierte Teil der Messstrahlen M und desto schwächer werden die von den unteren Lackschichten reflektierten Messstrahlen M, so dass ab einer gewissen Anzahl von Lackschichten die Schichtdicke der unteren Lackschichten nicht mehr bestimmt werden kann. Daher wird im dargestellten Beispiel die Schichtdicke d1 der ersten Lackschicht 26 auf eine andere Weise ermittelt, nämlich unter Verwendung der Messeinrichtung 22, mit der eine dielektrische, kapazitive oder magnetinduktive Schichtdickenmessung durchgeführt wird. Damit die erste Schichtdicke d1 der ersten Lackschicht mittels einer dielektrischen, kapazitiven oder magnetinduktiven Schichtdickenmessung bestimmt werden kann, müssen die erste Lackschicht 26 und/oder der Untergrund, also das Fahrzeugteil 12 elektrisch leitfähig sein. Hierzu kann die erste Lackschicht 26 mit elektrisch leitenden Partikeln 38, in diesem Fall mit Rußpartikeln versehen sein. Da das Fahrzeugteil 12 im dargestellten Beispiel aus Kunststoff ist, kann das Fahrzeugteil 12 die elektrische Leitfähigkeit im Allgemeinen nicht bereitstellen. Mit der dielektrischen, kapazitiven oder magnetinduktiven Schichtdickenmessung kann der Abstand der freien Oberfläche der Lackierung bis zur elektrisch leitfähigen ersten Lackschicht 26 gemessen werden. Für den Fall, dass die erste Lackschicht 26 nicht elektrisch leitfähig ist, kann der Abstand der freien Oberfläche der Lackierung bis zum elektrisch leitfähigen Fahrzeugteil 12 bestimmt werden.

Im dargestellten Ausführungsbeispiel soll angenommen werden, dass die erste Lackschicht 26 aufgrund der Zugabe der Rußpartikel elektrisch leitfähig ist. In diesem Ausführungsbeispiel ist es nicht möglich, die Gesamtschichtdicke dges der Lackierung mit der dielektrischen, kapazitiven oder magnetinduktiven Schichtdickenmessung zu bestimmen, allerdings erhält man eine Information der Summe der zweiten, dritten und vierten Schichtdicken d2 bis d4, die mit den Werten verglichen werden kann, welche über die optische Kohärenztomographie ermittelt worden sind. Man kann daher die ermittelten Werte auf Plausibilität prüfen.

Für den nicht dargestellten Fall, dass die erste Lackschicht 26 nicht elektrisch leitfähig, aber das Fahrzeugteil 12 elektrisch leitfähig ist, kann die Gesamtschichtdicke dges mittels der dielektrischen, kapazitiven oder magnetinduktiven Schichtdickenmessung ermittelt werden. Da die zweite, dritte und vierte Schichtdicke d2 bis d4 unter Verwendung der optischen Kohärenztomographie ermittelt werden können, kann die erste Schichtdicke d1 aufgrund einer Subtraktion d1 = dges-d2-d3-d4 ermittelt werden.

Die beiden Messverfahren können unabhängig voneinander durchgeführt werden und beeinflussen sich gegenseitig nicht. Mit Ausnahme des Auflegens des Messkopfs 24 auf das Fahrzeugteil 12 werden die beiden Messverfahren berührungslos durchgeführt, ohne das Fahrzeugteil 12 zu beschädigen oder zu zerstören.

### Bezugszeichenliste

- 10: Vorrichtung
- 12: Fahrzeugteil
- 14: Strahlungsquelle
- 14₁ bis 14₃: erste bis dritte Strahlungsquelle
- 16: Strahlenteiler
- 18: Spiegel

- 20: Detektor
- 21: Array
- 22: Messeinrichtung
- 24: Messkopf
- 25: Auswerteeinheit
- 26: erste Lackschicht
- 28: zweite Lackschicht

- 30: Farbpigment
- 32: dritte Lackschicht
- 34: plättchenförmige Pigmente
- 36: vierte Lackschicht
- 38: elektrisch leitfähige Partikel

- d1 bis d4: erste bis vierte Schichtdicke
- dges: Gesamtschichtdicke
- gs: Gangunterschied
- M: Messstrahl
- n: Brechungsindex
- n2 bis n4: zweiter bis vierter Brechungsindex
- P: Pfeil
- R: Referenzstrahl
- α: Winkel
- λ: Wellenlänge
- λ₁ bis λ₃: erste bis dritte Wellenlänge

## Patentansprüche

1. Verfahren zum berührungslosen und zerstörungsfreien Bestimmen der Schichtdicken von Lackschichten von Fahrzeugteilen (12), umfassend folgende Schritte:
- Bereitstellen eines Fahrzeugteils (12), wobei das Fahrzeugteil (12) aus einem elektrisch leitfähigen Material besteht oder dieses umfasst, mit einer auf das Fahrzeugteil (12) aufgebrachten ersten Lackschicht (26), die eine erste Schichtdicke (d1) aufweist, und mit mindestens einer auf die erste Lackschicht (26) aufgebrachten weiteren Lackschicht (28, 32, 36), die eine weitere Schichtdicke (d2, d3, d4) aufweist, wobei zumindest die weitere Lackschicht (28, 32, 36) optisch deckend ist,
- Bestimmen der Schichtdicken (d2, d3, d4) aller weiteren Lackschichten (28, 32, 36) mittels optischer Kohärenztomographie mittels einer Vorrichtung (10), die zum Durchführen einer optischen Kohärenztomographie ausgebildet ist und eine Messeinrichtung (22) zum Durchführen einer dielektrischen, kapazitiven oder magnetinduktiven Schichtdickenmessung aufweist,
- Bestimmen der Gesamtschichtdicke (dges) der Lackschichten (26, 28, 32, 36) mittels einer dielektrischen, kapazitiven oder magnetinduktiven Schichtdickenmessung unter Verwendung der Messeinrichtung (22),
- Bestimmen der Schichtdicke der ersten Lackschicht (26) dadurch, dass die Dicken aller weiteren Lackschichten (28, 32, 36) von der Gesamtschichtdicke (dges) abgezogen werden,
- wobei die Vorrichtung (10) mindestens eine Strahlungsquelle (14) zum Bereitstellen von elektromagnetischer Strahlung aufweist und die elektromagnetische Strahlung eine Wellenlänge (**λ**) von 100 bis 15*10³ nm und insbesondere 380 bis 800 nm zum Durchführen der optischen Kohärenztomographie bereitstellt.

2. Verfahren zum berührungslosen und zerstörungsfreien Bestimmen der Schichtdicken von Lackschichten von Fahrzeugteilen (12), umfassend folgende Schritte:
- Bereitstellen eines Fahrzeugteils (12), mit einer auf das Fahrzeugteil (12) aufgebrachten ersten Lackschicht (26), die eine erste Schichtdicke (d1) aufweist und elektrisch leitfähig ist, und mit mindestens einer auf die erste Lackschicht (26) aufgebrachten weiteren Lackschicht (28, 32, 36), die eine weitere Schichtdicke (d2, d3, d4) aufweist, wobei zumindest die weitere Lackschicht (28, 32, 36) optisch deckend ist,
- Bestimmen der Schichtdicken (d2, d3, d4) aller weiteren Lackschichten (28, 32, 36),
o wobei eine zweite Schichtdicke (d2), eine dritte Schichtdicke (d3) und eine vierte Schichtdicke (d4) mittels der optischen Kohärenztomographie bestimmt werden, und
∘ wobei die Summe der zweiten Schichtdicke (d2), der dritten Schichtdicke (d3) und der vierten Schichtdicke (d4) mittels einer dielektrischen, kapazitiven oder magnetinduktiven Schichtdickenmessung bestimmt wird,
mittels einer Vorrichtung (10), die zum Durchführen einer optischen Kohärenztomographie ausgebildet ist und eine Messeinrichtung (22) zum Durchführen einer dielektrischen, kapazitiven oder magnetinduktiven Schichtdickenmessung aufweist,
- Vergleichen der mittels Kohärenztomographie und der dielektrischen, kapazitiven oder magnetinduktiven Schichtdickenmessung bestimmten Schichtdicken (d2, d3, d4) aller weiteren Lackschichten (28, 32, 36) und Prüfen auf Plausibilität,
- wobei die Vorrichtung (10) mindestens eine Strahlungsquelle (14) zum Bereitstellen von elektromagnetischer Strahlung aufweist und die elektromagnetische Strahlung eine Wellenlänge (**λ**) von 100 bis 15*10³ nm und insbesondere 380 bis 800 nm zum Durchführen der optischen Kohärenztomographie bereitstellt.

3. Verfahren nach Anspruch 1,
**dadurch gekennzeichnet, dass** die Bestimmung der ersten Schichtdicke (d1) und/oder der weiteren Schichtdicke (d) unter Verwendung einer ersten Strahlungsquelle (14) und/oder einer zweiten Strahlungsquelle (14) durchgeführt wird, wobei die erste Strahlungsquelle (14) elektromagnetische Strahlung mit einer ersten Wellenlänge (**λ**₁) und die zweite Strahlungsquelle (14) elektromagnetische Strahlung mit einer zweiten Wellenlänge (**λ**₂) bereitstellt.

4. Verfahren nach Anspruch 3,
**dadurch gekennzeichnet, dass** die Bestimmung der ersten Schichtdicke (d1) und/oder der weiteren Schichtdicke (d2, d3, d4) unter Verwendung einer dritten Strahlungsquelle (14) durchgeführt wird, wobei die dritte Strahlungsquelle (14) elektromagnetische Strahlung mit einer dritten Wellenlänge (**λ**₃) bereitstellt.

5. Vorrichtung (10) zum berührungslosen und zerstörungsfreien Bestimmen der Schichtdicken von Lackschichten (26, 28, 32, 36) von Fahrzeugteilen (12), welche zum Durchführen der Schritte des Verfahrens nach einem der Ansprüche 1 bis 4 eingerichtet ist, umfassend
- eine Messeinrichtung (22) zum Durchführen einer dielektrischen, kapazitiven oder magnetinduktiven Schichtdickenmessung,
- eine Strahlungsquelle (14) zum Bereitstellen von elektromagnetischer Strahlung aufweist und die elektromagnetische Strahlung eine Wellenlänge (**λ**) von 100 bis 15*10³ nm und insbesondere 380 bis 800 nm zum Durchführen einer optischen Kohärenztomographie bereitstellt,
- einen Detektor (20), der so konfiguriert ist, dass sich die Messstrahlen M und die Referenzstrahlen R der optischen Kohärenztomographie treffen,
- eine Auswerteeinheit (25), die so konfiguriert ist, dass die vom Detektor (20) und von der Messeinrichtung (22) erzeugten Signale mittels der Auswerteeinheit (25) unter Verwendung von hierauf hinterlegten geeigneten Algorithmen analysiert und aufbereitet werden.

## Claims

1. Method for the contactless and nondestructive determination of the layer thickness of paint layers on motor vehicle parts (12), comprising the following steps:
- Providing a motor vehicle part (12), wherein the motor vehicle part (12) is comprised of or includes an electrically conductive material, with a first layer of paint (26) applied to the motor vehicle part (12), comprising a first layer thickness (d1), and with at least one further layer of paint (28, 32, 36), applied to the first layer of paint (26), comprising a further layer thickness (d2, d3, d4), wherein at least the further layer of paint (28, 32, 36) is optically opaque;
- Determining the layer thickness (d2, d3, d4) of all further layers of paint (28, 32, 36) by means of optical coherence tomography, by means of an apparatus (10), which is implemented to carry out an optical coherence tomography, and which comprises a measuring device (22) for carrying out a dielectric, a capacitive or a magnetic inductive measurement of the layer thickness;
- Determining the overall layer thickness (dges) of the layers of paint (26, 28, 32, 36) by means of a dielectric, a capacitive or a magnetic inductive measurement of the layer thickness using the measuring device (22);
- Determining the layer thickness of the first layer of paint (26) by subtracting the thickness of all further layers of paint (28, 32, 36) from the overall layer thickness (dges);
- wherein the apparatus (10) comprises at least one radiation source (14) for providing electromagnetic radiation and the electromagnetic radiation provides a wave length (λ) from 100 to 15×10³ nm and, in particular 380 to 800 nm, for carrying out the optical coherence tomography.

2. Method for the contactless and nondestructive determination of the layer thickness of paint layers on motor vehicle parts (12), comprising the following steps:
- Providing a motor vehicle part (12) having a first layer of paint (26) applied to the motor vehicle part (12), which comprises a first layer thickness (d1) and is electrically conductive, with at least one further layer of paint (28, 32, 36) applied to the first layer of paint (26), wherein at least the further layer of paint (28, 32, 36) is optically opaque;
- Determining the layer thickness (d2, d3, d4) of all further layers of paint (28, 32, 36);
o wherein a second layer thickness (d2), a third layer thickness (d3) and a fourth layer thickness (d4) are determined by means of the optical coherence tomography, and
o wherein the sum of the second layer thickness (d2), the third layer thickness (d3), and the fourth layer thickness (d4) is determined by means of a dielectric, capacitive, or magnetic inductive layer thickness measurement, by means of an apparatus (10), which is implemented to carry out an optical coherence tomography, and comprises a measuring device (22) for carrying out a dielectric, capacitive, or magnetic inductive layer thickness measurement;
- Comparing the layer thicknesses (d2, d3, d4) of all layers of paint (28, 32, 36) which were determined by means of coherence tomography and the dielectric, capacitive, or magnetic inductive layer thickness measurement and testing their plausibility;
- wherein the apparatus (10) comprises at least one radiation source (14) for providing electromagnetic radiation and the electromagnetic radiation provides a wave length (λ) from 100 to 15×10³ nm and, in particular 380 to 800 nm, for carrying out the optical coherence tomography.

3. Method in accordance with claim 1,
**characterized in that** the determination of the first layer thickness (d1) and/or of the further layer thicknesses (d) is carried out using a first radiation source (14) and/or a second radiation source (14), wherein the first radiation source (14) provides electromagnetic radiation with a first wave length (λ₁) and the second radiation source (14) provides electromagnetic radiation with a second wave length (λ₂).

4. Method in accordance with claim 3,
**characterized in that** the determination of the first layer thickness (d1) and/or of the further layer thicknesses (d2, d3, d4) is carried out using a third radiation source (14), wherein the third radiation source provides electromagnetic radiation with a third wave length ( λ₃).

5. Apparatus (10) for the contactless and nondestructive determination of the layer thickness of paint layers (26, 28, 32, 36) on motor vehicle parts (12) which is implemented to carry out the method steps in accordance with any of claims 1 to 4, comprising
- a measuring device (22) for carrying out a dielectric, capacitive, or magnetic inductive layer thickness measurement;
- a radiation source (14) for providing electromagnetic radiation and the electromagnetic radiation provides a wave length (λ) from 100 to 15×10³ nm and, in particular 380 to 800 nm, for carrying out the optical coherence tomography;
- a detector (20), which is configured such that the measurement beams M and the reference beams R of the optical coherence tomography meet;
- a processing unit (25), which is configured such that the signals generated by the detector (20) and by the measuring device (22) are analyzed and processed by means of the processing unit (25), using suitable algorithms which are stored in it.

## Revendications

1. Procédé de détermination non destructive et sans contact des épaisseurs de couches de peinture de parties de véhicule (12) comprenant les étapes suivantes consistant à :
- fournir une pièce de véhicule (12), cette pièce de véhicule (12) étant en une matière électro-conductrice ou comprenant une telle matière, avec une première couche de peinture (26) appliquée sur la pièce (12) qui a une première épaisseur de couche (d1) et au moins une autre couche de peinture (28, 32, 36) appliquée sur la première couche de peinture (26) et qui a une autre épaisseur de couche (d2, d3, d4), au moins cette autre couche de peinture (28, 32, 36) étant optiquement couvrante,
- déterminer les épaisseurs de couches (d2, d3, d4) de toutes les autres couches de peinture (28, 32, 36) par tomographie en cohérence optique à l'aide d'un dispositif (10) réalisé pour effectuer une tomographie en cohérence optique et comportant une installation de mesure (22) pour effectuer une mesure d'épaisseur de couche diélectrique, capacitive ou magnéto-inductive,
- déterminer l'épaisseur totale (dges) des couches de peinture (26, 28, 32, 36) à l'aide d'une mesure d'épaisseur de couche diélectrique, capacitive, magnéto-inductive en utilisant l'installation de mesure (22),
- déterminer l'épaisseur de la première couche de peinture (26) en retranchant de l'épaisseur totale des couches (dges), les épaisseurs de toutes les autres couches de peinture (28, 32, 36),
- le dispositif (10) comportant au moins une source de rayonnement (14) pour fournir un rayonnement électromagnétique et ce rayonnement électromagnétique a une longueur d'onde (λ) comprise entre 100 jusqu'à 15*10³ nm et notamment entre 380 et 800 nm pour la tomographie en cohérence optique.

2. Procédé de détermination non destructif et sans contact des épaisseurs de couches de peinture de parties de véhicule (12) comprenant les étapes suivantes consistant à :
- fournir une pièce de véhicule (12) ayant une première couche de peinture (26) appliquée sur la pièce de véhicule (12) et qui a une première épaisseur de couche (d1) et est électro-conductrice et avec au moins une autre couche de peinture (28, 32, 36) appliquée sur la première couche de peinture (26) qui a une autre épaisseur de couche (d2, d3, d4), au moins cette autre couche de peinture (28, 32, 36) étant optiquement couvrante,
- déterminer les épaisseurs (d2, d3, d4) de toutes les autres couches de peinture (28, 32, 36),
* la tomographie en cohérence optique déterminant une seconde épaisseur de couche (d2), une troisième épaisseur de couche (d3) et une quatrième épaisseur de couche (d4), et
* déterminer la somme de la seconde épaisseur de couche (d2), de la troisième épaisseur de couche (d3) et la quatrième épaisseur de couche (d4) à l'aide d'une mesure d'épaisseur de couche, diélectrique, capacitive ou magnéto-inductive, à l'aide d'un dispositif (10) réalisé pour exécuter une tomographie en cohérence optique et une installation de mesure (22) pour effectuer une mesure d'épaisseur de couche, diélectrique, capacitive, ou magnéto-inductive,
- comparer les épaisseurs de couche (d2, d3, d4) de toutes les autres couches de peinture (28, 32, 36) obtenues par la tomographie en cohérence et la mesure diélectrique capacitive ou magnéto-inductive d'épaisseur de toutes les autres couches de peinture (28, 32, 36) et contrôler la plausibilité,
- le dispositif (10) comportant au moins une source de rayonnement (14) pour fournir un rayonnement électromagnétique, ce rayonnement électromagnétique ayant une longueur d'onde (λ) de 100 à 15*10³ nm et notamment 380-800 nm pour la tomographie en cohérence optique.

3. Procédé selon la revendication 1,
**caractérisé en ce que**
la détermination de la première épaisseur de couche (d1) et/ou de l'autre épaisseur de couche (d) se fait en utilisant une première source de rayonnement (14) et/ou une seconde source de rayonnement (14), la première source de rayonnement (14) ayant un rayonnement électromagnétique d'une première longueur d'onde (λ₁) et la seconde source de rayonnement (14) ayant un rayonnement électromagnétique d'une seconde longueur d'onde (λ₂).

4. Procédé selon la revendication 3,
**caractérisé en ce que**
la détermination de la première épaisseur de couche (d1) et/ou des autres épaisseurs de couche (d2, d3, d4) se fait en utilisant une troisième source de rayonnement (14), cette troisième source de rayonnement (14) étant une source électromagnétique d'une troisième longueur d'onde (λ₃).

5. Dispositif (10) pour la détermination non destructive et sans contact de l'épaisseur de couches de peinture (26, 28, 32, 36) de pièces de véhicule (12), pour la mise en oeuvre du procédé selon l'une des revendications 1 à 4, comprenant :
- une installation de mesure (22) pour effectuer une mesure d'épaisseur de couche, diélectrique, capacitive, ou magnéto-inductive,
- une source de rayonnement (14) pour fournir un rayonnement électromagnétique, ce rayonnement électromagnétique ayant une longueur d'onde (λ) de 100 à 15*10³ nm et notamment de 380 à 800 nm pour effectuer une tomographie en cohérence optique,
- un détecteur (20) configuré pour que les rayons de mesure M et rayons de référence R de la tomographie en cohérence optique se rencontrent,
- une unité d'exploitation (25) configurée pour analyser et préparer les signaux générés par le détecteur (20) et par l'installation de mesure (22) à l'aide d'une unité d'exploitation (25) en utilisant des algorithmes appropriés, enregistrés à cet effet.
